# EUROPÄISCHE PATENTSCHRIFT

(11) **EP 1 213 406 B1**
(45) Veröffentlichungstag und Bekanntmachung des Hinweises auf die Patenterteilung: **18.05.2005**
(21) Anmeldenummer: 01129037.6
(22) Anmeldetag: 07.12.2001
(51) Int. Cl.: E04F 13/08, E04F 15/18, E04B 1/62

(54) **Wärmedämmende Wandverkleidung**
Heat insulating wall covering
Revêtement de paroi isolant

(30) Priorität: 07.12.2000 DE 10058501
(43) Veröffentlichungstag der Anmeldung: 12.06.2002
(73) Patentinhaber: Schnös, Hermann, 97478 Knetzgau/Westheim (DE)
(72) Erfinder: Schnös, Hermann, 97478 Knetzgau/Westheim (DE)
(74) Vertreter: Pöhner, Wilfried Anton, Dr.

(56) Entgegenhaltungen:
- WO-A-97/11842
- DE-A- 2 044 961
- DE-U- 29 922 190
- FR-A- 2 503 802
- FR-A- 2 669 957
- US-A- 1 912 972

## Beschreibung

Die Erfindung bezieht sich auf eine wärmedämmende Wandverkleidung mit mittels Befestigungselemente angebrachten Abdeckplatten und Isolationspaneelen und mit einer Folie al Dampfsperre.

Aus unterschiedlichen Bereichen der Bauindustrie bekannt ist die Vomahme wärmedämmender Maßnahmen, so z. B. bei der Verkleidung von Mauerwerk als auch den Ausbau des Dachstuhles. Hierbei werden in der Regel aus geschäumtem Kunststoff bestehende Platten mit Hilfe von Befestigungselementen an Wand oder Dachbalken festgelegt und zusätzlich eine aus Folie bestehende Dampfsperre eingebracht, die sicherstellt, daß keine durch kontensationsbedingte Feuchtigkeitsschäden auftreten können.

Weiter sind aus dem Stand der Technik hocheffizient dämmende Vakuumisolationspaneelen (im folgenden abgekürzt mit VIP) bekannt und werden als Massenprodukt hergestellt. Sie sind flache evakuierte Wärmedämmkörper und bestehen aus mikroporösen pulverförmigen Material das zu einer Platte verpresst wird. Nach Umhüllung mit einer gasdichten Folie wird die Luft evakuiert und somit ein hochdämmendes Vakuum erzeugt.

Diese Paneelen erreichen je nach Paneelendicke von 0,5 bis 8 cm eine sehr geringe Wärmeleitfähigkeit von 0,01 und 0,002 W/mK. Die Stabilität und Steifigkeit der VIP ist nur so lange gewährleistet, wie das Vakuum vorhanden ist. Kommt es zu einer Verletzung der Umhüllung, die aus einer Metall-Kunststoff-Verbundfolie besteht, so führt dies zu einer drastischen Verschlechterung der Wärmedämmung und die Umhüllung bläst sich auf und wird mechanisch instabil. Deshalb ist unbedingt ein Schutz der Paneelenoberfläche im eingebauten Zustand erforderlich und eine direkte Befestigung der VIP am Untergrund ohne Haltekomponenten nicht ratsam.

In der Patentliteratur werden bereits einige Möglichkeiten zum Aufbau von Wärmedämmsystemen mit VIP aufgezeigt. In der DE 4339435 wird vorgeschlagen, die VIP zwischen zwei Glasscheiben einzulegen und mit gängigem Randverbund gas- bzw. vakuumdicht abzuschließen. Diese Glaspaneellen sind teuer und am Bau schwer zu montieren und müssen zudem sehr stabil befestigt werden. In der WO 97/11842 sind die VIP im Randbereich wie ein Bilderrahmen mit PU eingeschäumt. Bei der Montage wird die Paneele durch den PU-Rand hindurch am Untergrund befestigt. Diese Lösung hat den Nachteil, dass der PU-Schaum einen wesentlichen schlechteren Dämmwert aufweist als die VIP und deshalb zwangsweise zu dickeren Isolierung führt und zudem keine durchgehende homogene Oberfläche für eine eventuelle Fassadenbeschichtung vorhanden ist. Bei einer nach der Montage auftretenden Beschädigung wird die VIP belüftet, die Eigenstabilität der Paneele geht verloren und die Wärmedämmfunktion wird stark beeinträchtigt.

Es hat sich als vorteilhaft erwiesen, wenn die VIP zusätzlich zum Oberflächenschutz aus Glas, Blech oder sonstigen Platten noch weitere mechanische Verbindungen mit dem Untergrund aufweist. Damit ist auch nach einer Beschädigung der VIP-Schutzfolie eine sichere Fixierung der VIP und der Fassadenbeschichtung gewährleistet.

DE 299 22 190 U offenbart ein Vakuumpaneel für eine Wandverkleidung. Das Valcuumpaneel ist in einen Rahmen aus Holzbalken eingelegt.

DE 20 44 961 A beschreibt eine wärmedämmende Wandverkleidung mit Isolierplatten zwischen waagerecht verlaufenden, H-förmigen Halteleisten und Abdeckplatten, die randseitig an den Leisten befestigt sind.

Aus FR 2 669 957 A ist eine wärmedämmende Wandverkleidung bekannt, wobei eine Isolierschicht an der Wand verklebt ist und Abdeckplatten mittels U-bzw. T-förmigen Profilen gehalten. sind.

In FR 2 503 802 A ist eine Wandverkleidung mit Halteleisten und Isolierplatten beschrieben.

Diesen Dokumenten ist aber keines der folgenden Teile bzw. Merkmale entnehmbar:
- eine Folie als Dampfsperre,
- eine zusätzliche Folie, welche die die Dampfsperre durchgreifenden Befestigungselemente flächig dichtend überklebt,
- Vakuumpaneele, und
- die Tatsache, dass die Dampfsperre auf der wärmenden Seite der Vakuumisolationspaneele angebracht ist.

Aus US 1 912 972 A ist eine Wandverkleidung mit einer Folie als Dampfsperre bekannt. Diese Verkleidung umfasst aber keine Isolierplatten.

Es stellt sich somit die Aufgabe für die Erfindung eine Wandverkleidung mit einer dauerhaften und hocheffizienten Dämmung durch eine Integration der Vakuumisolationspaneelen für Alt- und Neubauten zu entwickeln.

Gelöst wird diese Aufgabe mit einer Wandverkleidung gemäß dem Anspruch 1.

In den abhängigen Ansprüchen 2 bis 22 sind bevorzugte Ausführungs formen definiert

Voranzustellen ist, daß der Begriff "Wand" im Sinne der Erfindung weit auszulegen ist und neben im wesentlichen in vertikaler Richtung ausgerichteten Wänden zusätzlich auch Decken und Böden umfaßt. Weiter sind unter dem Begriff Halteleisten alle waagrecht verlaufenden Leisten umfaßt. Sie werden gebildet aus den Grundleisten die also als unterer (und auch oberer) Abschluß der durch Paneelen gebildeten Flächen dienen. Die zwischen benachbarten Paneelen hingegen befindlichen Leisten werden als Zwischenleisten bezeichnet. Sie sind außenends als T geformt, so daß bei der benachbarten Paneelen stirnseitig umfaßt werden können. Zielrichtung der Erfindung ist die Schaffung einer Wandverkleidung mit dessen Hilfe der Einsatz der hochwärmedämmenden Vakuumisolationspaneelen als Wandverkleidung möglich wird. Hinzu kommt eine Dampfsperre, die an den Durchstoßpunkten der Folie, an jenen Punkten also, an denen sie durch die Befestigungselemente durchgriffen werden dichtend überklebt sind, um eine flächige Feuchtigkeitsisolation zu erzielen.

Hauptvorzüge der Erfindung sind zum einen die effiziente Nutzung des hohen Dämmungsvermögens der Vakuumisolationspaneelen (VIP) und zum anderen einen sicherer Befestigung der gesamten wärmedämmendem Wandverkleidung mittels verfügbarer und am Bau bewährter Komponenten. Dabei wird die vorzugsweise rechteckige, hocheffizient dämmende, jedoch sehr verletzungsempfindliche VIP zwischen Halteleisten, Dampfsperre und entsprechendem Oberflächenschutz an der zu dämmenden Wand, Decke oder Boden fixiert und gegen Beschädigung geschützt.
Als Halteleisten werden Grundleisten mit einem U-Profil, Zwischenleisten mit einem T-Profil und einem zusätzlichen Haltesteg sowie Stützleisten mit einem T-Profil eingesetzt. Die Leisten sind aus einem bautechnisch erprobten Kunststoff, mit einer geringen Wärmeleitzahl vorzugsweise aus Hart-PVC.
Die Halteleisten werden mit Befestigungselementen z.B. Schlagoder Schraubdübel am Untergrund angebracht. Die Mittelstege der Leisten sind so abgestimmt, dass sie am die VIP und einen Teilbereich der Abdeckplattenwandstärke aufnehmen. Der andere Teilbereich der Abdeckplattenwandstärke ist so dimensioniert, dass die Abdeckplatte die Leisten im montierten Zustand überdecken und so zur Aufnahmen des Fassadenschutzes eine ebene und homogene Oberflächen bilden.

Ist eine Reihe mit VIP und Abdeckplatten verlegt, so werden in die umlaufende Nut der Abdeckplatten Zwischenleisten eingelegt und am Untergrund befestigt. Der schmale Mittelsteg der Kunststoffleiste bildet nur eine relativ klein Wärmebrücke zwischen Außen- und Innenseite der wärmedämmenden Wandverkleidung und wird zudem noch vom Oberflächenschutz, bzw. der Fassadenbeschichtung abgedeckt.

Der Begriff Abdeckplatte ist im Sinne der Erfindung weit auszulegen. Er umfaßt in der Regel alle Elemente, die zur Verkleidung von Wänden, Decken und Böden geeignet sind. Besonders bevorzugt ist, hierfür Styroporplatten und/oder Gipskartonplatten und/oder Holzverkleidungen einzusetzen. Letztere Altemative eignet sich vor allem auch für den Fußbodenaufbau.

Im unteren horizontalen Abschlußbereich der Wandverkleidung aber auch an den in vertikaler Richtung verlaufenden Kanten, also dort, wo die Verkleidung nicht um die Ecke geführt ist, ist eine Abdichtung erforderlich unter Verwendung eines Materiales hinreichend hoher Dampfdichtigkeit. Es ist sicher zu stellen, daß neben der Unterbindung der Luftzirkulation auch kein Dampf eindringen kann.

In einer speziellen Ausgestaltung werden in der Wandverkleidung Heiz- oder Wärmestrahlelemente sowie Versorgungsleitungen in den einzelnen Leisten insbesondere in den Zwischenleisten verlegt.

Vorteile der aufgezeichneten Wärmeverkleidung
- Verarbeitung in bauüblicher Reihenanordnung und einfache Anbringung am Untergrund
- Es werden nur die Halteleisten waagrecht mit bauüblich en Befestigungselementen an der Wand befestigt
- Die Halteleisten besitzen eine niedrige Wärmeleitzahl und bilden nur eine relativ kleine Wärmebrücke sie sind zudem noch abgedeckte
- Es werden nur bewährte und gängige Materialien und Komponenten verwendet
- Die durchgehend, ganzflächig angebrachte, selbstklebende Dampfsperre befinden sich stets auf der warmen Dämmseite
- Eine gewissenhaft angebrachte Dampfsperre sorgt für eine langlebige Wärmedämmung und schützt die Bausubstanz
- Die hocheffizient dämmende VIP wird allseits geschützt eingebaut
- Es ergibt sich eine sehr gute Wärmedämmung bei niedrigem Aufbau
- Die an den Rändern eingefrästen Abdeckplatten werden tragischer von Halteleisten aufgenommen und bilden eine ebene und homogenen Oberfläche
- Vorgefertigte und miteinander zu einem Bauteil verbundene VIP und Abdeckplatten sind verletzungsunempfindlich und am Bau schneller zu verarbeiten
- Standard Oberflächenbeschichtungen können eingesetzt werden
- Trockeneinbau bzw. Trockenverlegung ist auch für nachträgliche Wärmeisolierung geeignet
- Der niedrige Aufbau eignet sich sehr als Wärmedämmung für Fußbodenheizung
- Die Halteleisten bieten die Möglichkeit technische Leitungen abzudecken

Bereits hingewiesen wurde darauf, daß die vorgeschlagene Wandverkleidung sich nicht nur zur Innen-/Außenverkleidung vertikaler Wände, sondern auch zum Einsatz an Boden und Decken eignet. Im folgenden werden diese wesentlichen vier verschiedenen Anbringungsmöglichkeiten zur weiteren Verdeutlichung im einzelnen näher erläutert
a) Wärmedämmung außen an der Wand
b) Wärmedämmung innen an der Wand
c) Wärmedämmung an der Decke
d) Wärmedämmung am Boden

Erfindungsgemäß wird die wärmedämmende Wandverkleidung entsprechend der kennzeichnenden Merkmale des Hauptanspruchs und er Unteransprüche zusammengestellt und montiert.

### a) Wärmedämmung an der Außenfassade

Bei der Wärmedämmung an der Außenfassade ist besonders auf eine dichte Dampfsperre, auf eine stabile Befestigung der VIP und auf eine ebene, homogene Oberfläche als Basis für eine Fassadenbeschichtung zu achten.
Im folgenden wird der Aufbau und die Montage der wärmedämmende Wandverkleidung beschrieben. Nach einer bauüblichen Untergrundvorbereitung wird die trockene und relativ ebene abgeklebt. Die Überlappung der Alufolie sollte hierbei mindestens 5 cm betragen. Nur werden Halteschienen, vorzugsweise aus Hart-PVC waagrecht mit Schlag- oder Schraubdübel über der Alufolie montiert und die Befestigungsstellen zusätzlich zur Erlangen einer sicheren Dampfsperre mit Alufolie abgeklebt.
Für die erste waagrechte Halteschienenreihe werden Grundleisten mit einem U-Profil verwendet. An einem Schenkel befinden sich Durchbrüche für die Befestigungselemente und am gegenüberliegenden Schenkel Durchbrüche für das Werkzeug zum Anbringen bzw. Anziehen der Befestigungselemente. Es können auch U-Profile mit unterschiedlich langen Schenkeln verwendet werden, wobei am längeren Schenkel gut zugängliche Durchbrüche für die Befestigungselemente vorgesehen sind.
In diese Grundschiene wird eine VIP vorzugsweise im Hochformat eingelegt und mit einem oder mehreren Klebepunkten an der Alufolie vorfixiert. Dann wird eine Abdeckplatte aus Schaumstoff, insbesondere aus Styropor, mit einer am größten Umfang umlaufenden Nut über den Steg der Grundleiste gesteckt und ebenfalls mit einem Kleber an der VIP fixiert. Durch die Nut ergeben sich an der Abdeckplatte zwei Randbereiche. Der zur VIP zeigende Randbereiche ist etwa um eine halbe bis zu einer ganzen Mittelstegdicke kürzer als der andere Randbereich, so dass benachbarte Abdeckplatten quasi aneinander anliegen, die Leiste abdecken und somit eine homogene Außenfläche bilden.
Zur weiteren Versteifung der Wärmedämmung können noch Stützleisten mit einem T-Profil aus Hart-PVC senkrecht in die Abdeckplatten-Nut eingesteckt werden. Die Enden der Stützleisten sind so gestaltete, dass nur noch der Mittelsteg vorhanden ist. Dadurch wird erreicht, dass im montierten Zustand die Außenflächen der Halteleisten und der Stützleisten bündig verlaufen. Die nächsten VIP und Abdeckplatten sowie die Stützleisten werden ebenso in die Grundleiste eingelegt, bis die Reihe fertig ist. Passt keine VIP mehr in die letzte zu dämmende Lücke, so wird eine entsprechend dicke Hartschaumplatte auf die richtige Restbreite zugeschnitten und mit ihrer Nut in die Grundleiste bzw. Stützleiste eingesteckt und ebenfalls mit einem Kleber an der Alufolie fixiert. Die Vakuumisolationspaneelen und die dazu passenden Abdeckplatten können bereits als Komplettelement eventuelle sogar mit eingelegter Stützleiste vormontiert an der Baustelle angeliefert und verarbeitet werden.

Als Basis für eine weitere Wärmedämmreihe werden als nächste Halteleisten, die mit einem T-Profil und zusätzlichen Halteschenkel am Mittelsteg ausgestatteten Zwischenleisten, in die Nut der Abdeckplatten eingelegt. Danach werden die Zwischenleisten an den entsprechenden Durchbrüchen am Haltesteg mit bewährten Befestigungselementen z.B. Schlag- oder Schraubdübel über die Alufolie an der Außenwand befestigt. Die Befestigungsstellen werden wieder mit Alufolie oder mit einem dampfdichten Kartuschenkitt vorzugsweise einem Acryldichtstoff abgedichtet. Auch diese und weitere Reihen werden, wie bereits beschrieben mit Alufolie Vakuumisolationspaneelen und Abdeckplatten wärmegedämmt. Endbereich und schräge Restflächen werden noch mit zugeschnittenen, entsprechende dicken Hartschaumplatten verkleidet. Zur weiteren Versteifung der Wärmedämmung können an den Außenkanten und an Fenster- und Türkanten bauübliche und entsprechend dimensionierte Eckschienen angebracht werden, bevor eine Fassadenbeschichtung unter Beachtung der bekannten Regeln und Werksvorschriften aufgetragen wird.

### b) Wärmedämmung an der Innenseite der Außendämmung

Die Wandverkleidung für Innendämmung unterscheidet sich von der Außendämmung zum einen durch die Anordnung der Dampfsperre und zum anderen durch die Möglichkeit der Abdeckung der Vakuumisolationspaneelen. So können zum Schutz der verletzungsgefährdeten, vakuumdichten Paneelenfolie in den Innenräumen die Vakuumisolationspaneelen entweder wie an der Fassadendämmung, Reihe für Reihe mit etwa gleich großen Abdeckplatten abgedeckt werden oder mit stabilen Vorsatzschalen verkleidet werden, die nur oben an der Decke und unten am Boden befestigt werden müssen. Die Dampfsperre ist nach bauphysikalischen Gesichtspunkten stets auf der warmen Seite der VIP anzuordnen, also bei einer Innendämmung nach Anbringen der Vakuumisolationspaneelen.

An die zu dämmende Innenseite der Außenwand werden nach entsprechender Untergrundbehandlung (eben und trocken) die Grundleisten mit U-Profil an den entsprechenden Durchbrüchen mit bauüblichen Befestigungselementen montiert. Werden als Basis für die erste Wärmedämmreihe die mit T-Profil und zusätzlichem Halteschenkel ausgestatteten Zwischenleiste an der Wand angebracht, so können in dem so entstandenem Hohlraum technische Leitungen z.B. für Strom, Wasser oder Heizung abgedeckt werden. Die erste Reihe der Vakuumisolationspaneelen werden in die bereits montierte Grund- bzw. Zwischenleiste eingesteckt und mit einem Kleber an der Wand fixiert. Zur Errichtung der Dampfsperre werden die Ränder der VIP mit selbstklebender Alufolie abgeklebt und an den Berührstellen der VIP mit der Leiste, wo dies nicht so einfach möglich ist, wird mit einem dampfdichten Kartuschenkitte z.B. einem Acryldichtstoff abgedichtet. Anschließend werden die speziell mit einer Nut und einer Anfräsung des einen Randabschnittes versehenen Abdeckplatten aus Gipsfaser-Werkstoff oder mitteldichten, schraubbaren Holzfaserplatten mit der Nut auf den Schenkel der waagrechten Halteleiste aufgesteckt und mit einem Kleber fixiert. Resteinbaustücke werden aus entsprechend dicken Hartschaumplatten geschnitten und ebenfalls mit einem Kleber am Untergrund befestigt. Als Basis für die nächste Wärmedämmreihe werden die Zwischenleisten die ein T-Profil mit einem Halteschenkel aufweisen in die Nut der stehenden Gipsfaserplatten eingelegt und mit Befestigungselementen oder einem Kleber an der Wand befestigt Vakuumisolationspaneelen und Abdeckplatten werden wie in der ersten Reihe auch in den nächsten Reihen in die Halteleiste insbesondere in die Zwischenleiste eingelegt, mit einem Kleber fixiert und zwischen VIP und der Abdeckplatte die Dampfsperre angebracht. An Stelle der Alufolie können auch einseitig mit Alu kaschierte Gipsplatten angeklebt werden. Die sonst verwendeten Abdeckplatten können somit entfallen und Halteleisten mit kürzeren Mittelschenkel können verwendet werden. Die Oberfläche der Gipskartonplatten oder Holzfaserplatten können mit Farbe oder Tapeten beschichtet bzw. gestaltet werden.
Wird die Wand mit einer Vorsatzschale verkleidet, die nur an der Decke und dem Boden befestigt werden muss, so werden Halteleisten mit kürzeren, auf die Dicke der VIP angepasste Mittelstege verarbeitet. Nach Anbringung der Halteleisten und der Vakuumisolationspaneelen wird eine selbstklebende Alufolie aufgezogen und wenn erforderlich die Übergänge zum Boden und zur Decke mit einem Acryldichtstoff abgedichtet. Danach wird die selbsttragende Vorsatzschale an Decke und Boden befestigt. Zwischen Vorsatzschale und Dampfspeere können auch Heizelemente einer Wandstrahlheizung angeordnet werden. Bei der eventuellen Befestigung der Wandstrahlheizelemente an den Halteleisten ist darauf zu achten, dass die Dampfsperre nicht verletzt bzw. wieder abgedichtet wird.

### c) Wärmedämmung der Decke

Auch hier bietet sich die Möglichkeit die Isolationspaneelen mit einer Dampfsperre zu versehen und mit Abdeckplatten zu verkleiden sowie die Oberfläche anschließend bauüblich zu beschichten oder nach Anbringen der Vakuumisolationspaneelen die gesamte Decke mit einer Dampfsperre zu beschichten und danach mit einer Spanndecke z.B. mit einer PVC-Folie abzuhängen. Wenn die Spanndecke aus einem dampfdichten Material besteht kann die sonst erforderliche Dampfsperre entfallen. Die Anbringung der wärmedämmenden Wandverkleidung an der Decke erfolgt ähnlich wie an der Wand. In die montierte Grundleiste wird die VIP eingeschoben und mit einem Kleber an der Decke befestigt . Anschließend wird die Dampfsperre eingebaut und die Abdeckplatten in die Leiste geschoben und mit einem Kleber an der VIP fixiert. Zur Versteifung der Wärmedämmung kann, wie bei der Außendämmung beschrieben, in der Nut an der Längsseite der Abdeckplatten eine Stützleiste aus Hart-PVC eingelegt und in die Halteleiste eingeschoben werden. Auch die Montage der folgenden Reihen mit den Zwischenleisten erfolgt wie bei der Außendämmung. Die Abdeckplatten überdecken wieder die Halteschienen und bilden so eine homogene ebene Fläche, die beschichtet bzw. gestaltet werden kann. Es bietet sich auch die Möglichkeit die Dampfsperre nicht zwischen VIP und Abdeckplatte, sondern als selbstklebende dampfdichte Folie auf die Abdeckplatte aufzuziehen und diese mit einer Tapete oder anderen bauüblichen Beschichtungen zu gestalten.

### d) Wärmedämmung am Boden

Da der Boden naturgemäß stärker belastet wird, ist hier auf einen besonders stabilen und tragfähigen Untergrund zu achten. Nach entsprechender Untergrundvorbereitung wird der trockene saubere und ebene Boden geglättet bzw. bei Bedarf mit Spannplatten oder Gipsplatten vollflächig ausgelegt. Zwischen den am Boden befestigten, mit einem besonders tragfähigen Mittelsteg ausgerüsteten Grundund Zwischenleisten oder Rücken an Rücken montierte Grundleisten werden die Vakuumisolationspaneelen eingelegt und die Fugen rund um die Paneelen dampfdicht verschlossen. Die Vertiefungen werden mit Quarzmehl bis auf die Höhe der Halteleisten aufgefüllt und eben abgezogen. Anschließend wird die ganze Fläche mit Druckausgleichsplatten z.B. mit stabilen Gipsplatten oder tragfähigen Spannplatten ausgelegt und Trockenestriche nach Werkvorschrift aufgetragen. Vor der Montage der Halteleisten können noch technische Leitungen z.B. für Strom, Wasser oder Heizung zwischen Wand und Haltesteg verlegt werden. Die Restflächen, in die keine ganze VIP mehr hineinpasst werden mit entsprechend dicken, zugeschnittenen Hartschaumplatten ausgelegt und mit einer Dampfsperre versehen.

Anhand von vier Figuren wird beispielsweise der Aufbau der wärmedämmenden Vakuum-Wandverkleidung erklärt. Es zeigt:
Fig. 1 Wandverkleidung an der Außenwand
Fig. 2 Wandverkleidung an der Innenwand
Fig. 3 Wandverkleidung am Boden
Fig. 4 Leistungsanordnung zum Befestigen der Vakuumisolationspaneele

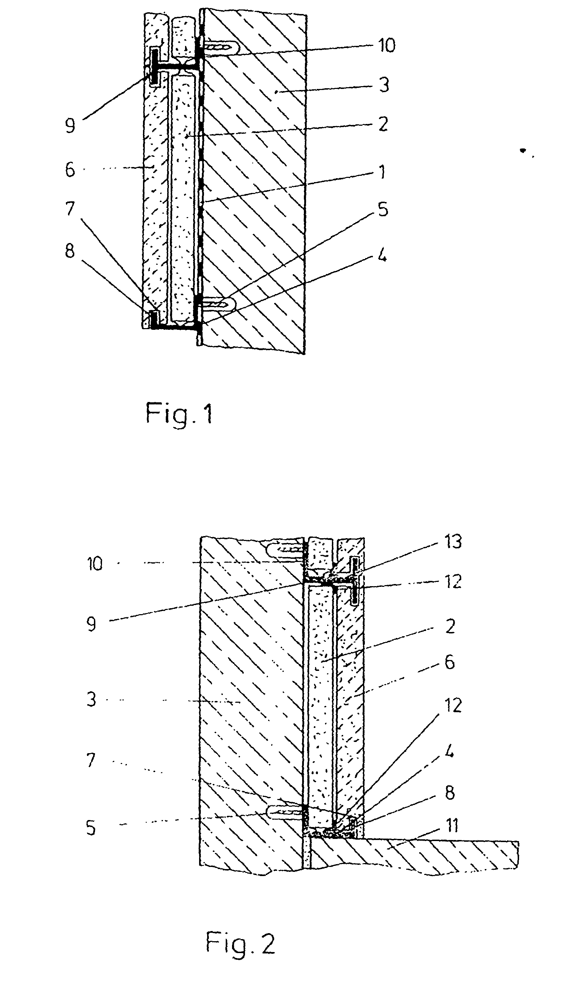

Fig. 1 zeigt den Aufbau einer Außendämmung mit Vakuumisolationspaneelen. Für die dauerhafte Gewährleistung der hocheffizienten Wärmedämmung dieses Dämmsystems sind zum einen die funktionssichere Dampfsperre 1 und zum anderen der Schutz der Vakuumisolationspaneelen 2 vor mechanischer Verletzung von entscheidender Bedeutung.
Die Außenwand 3 wird dampfdicht mit der Dampfsperre 1, aus selbstklebender Alufolie abgedeckt. Die Grundleiste 4 wird mit Befestigungselementen 5 vorzugsweise mit Schlag- oder Schraubdübeln waagrecht über der Dampfsperre 1 an der Außenwand 3 befestigt. In die Grundleiste 4 wird die Vakuumpaneele 2 hineingestellt und mit einem Kleber an der Alufolie fixiert. Nun wird die Abdeckplatte 6 mit ihrer Nut 7 auf den freien Schenkel 8 der Grundleiste 4 gesteckt und ebenfalls mit einem hier nicht gezeigten Klebepunkt an der Vakuumisolationspaneele 2 fixiert. Die Zwischenleiste 9 wird zu abschließenden Befestigung der ersten Dämmreihe mit dem Schenkel 8 in die Nut 7 der Abdeckplatte 6 eingesteckt und an ihrem Befestigungsschenkel 10 mit Befestigungselement 7 über der Dampfsperre 1 an der Außenwand 3 befestigt. Die Befestigungselemente 5 werden noch mit einer Alufolie oder mit einem dampfdichten Kartuschenkitt abgedichtet. Zur Versteifung der wärmedämmenden Wandverkleidung werden noch nicht gezeigte Stützleisten senkrecht in die seitliche Nut 7 der Abdeckplatten 6 eingelegt. Diese Stützleisten haben ein T-Profil und verlaufen bündig mit dem Grund- und Zwischenleisten 4 und 9 und stützen sich an deren Schenkel 8 ab.

Fig. 2 zeigt den Aufbau einer wärmedämmenden Wandverkleidung innen an der Außenwand. Der Grundleiste 4 wird an der Außenwand 3 mit Befestigungselement 5 montiert. Hierbei kann die Grundleiste 4 mit dem Schenkel 8 nach oben auf den Boden 11 gelegt werden. Wird an Stelle der Grundleiste 4 als Anfangsleiste eine Zwischenleiste 9 an der Außenwand 3 befestigt, so können in dem entstandenen Zwischenraum technische Leitungen verlegt bzw. von der Zwischenleiste 9 abgedeckt werden. Im Gegensatz zur Anbringung der Außendämmung wird bei der Innendämmung die Dampfsperre nicht direkt an der Wand 3 angebracht, sondern erst nachdem die Vakuumisolationspanelle 2 in die Grundleiste 4 eingelegt ist. Die senkrechten Stöße der Vakuumisolationspaneelen 2 werden mit einer selbstklebenden Alufolie dampfdicht abgedichtet. Die Fuge zwischen Vakuumisolationspaneele 2 und der Grundleiste 4 wird mit einem Kartuschenkitt 12 dampfdicht abgedichtet.
Anschließend wird die Abdeckplatte 6 mit ihrer Nut 7 auf den Schenkel 8 gesteckt und mit einem Kleber an der Vakuumisolationssperre 2 vorfixiert. Bevor nun die Zwischenleiste 9 mit einer Dampfsperre versehen werden. Dies geschieht durch das Auftragen von Kartuschenkitt 12 über dem Spalt zwischen Vakuumisolationspaneele 2 und Abdeckplatte 6. Beim Eindrücken der Zwischenleiste 9 in die Nut 7 wird der Kartuschenkitt 12 vom Mittelsteg 12 der Zwischenleiste 9 angedrückt. Dabei kommt es zu einer dampfdichten Verbindung der Isolationspaneele 2 und dem Mittelsteg 13. Die Zwischenleiste 9 wird am Befestigungsschenkel 10 und Befestigungselement 5 an der Wand 3 angebracht und anschließend eine weitere Wärmedämmreihe aufgesteckt.

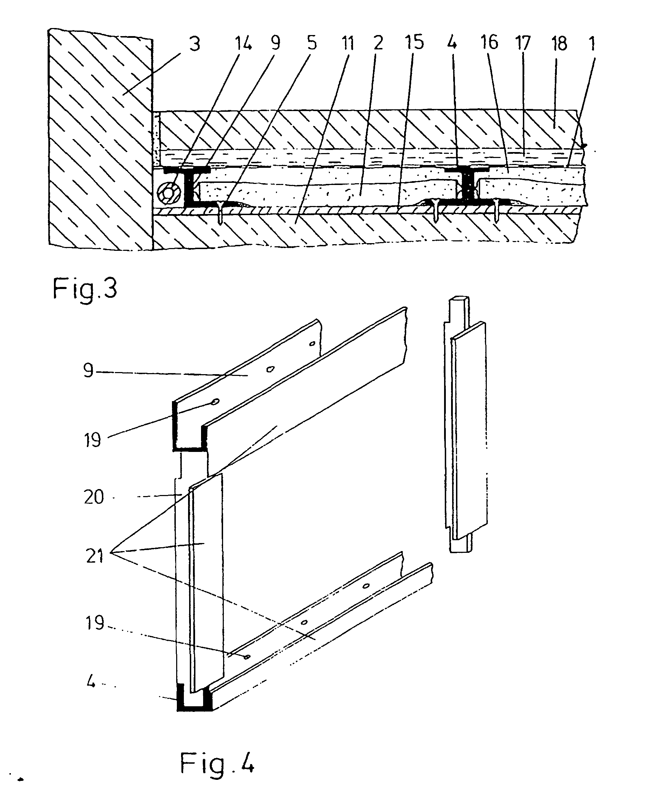

Fig. 3 zeigt den Aufbau einer wärmedämtnänden Wandverkleidung am Boden 11. Der Boden 11 muss trocken und eben sein. Bei Bedarf wird der Boden 11 noch mit stabilen Gips- oder Spanplatten 15 abgedeckt. An der Wand 3 wird entweder die Grundleiste oder, wenn technische Leitungen 14 abzudecken sind, auch die Zwischenleiste 9 angelegt und mit Befestigungselementen 5 am Boden 11 fixiert. Die Vakuumpaneele 2 wird in die Halteleiste, hier eine Zwischenleiste 9 eingelegt, anschließend wird die nächste Zwischenleiste angelegt. Bei höher belasteten Böden kann auch, wie hier gezeigt, die Tragfähigkeit durch das Aneinanderlegen von zwei Grundleisten 4 erhöht werden. In diesem Fall wird erst die Vakuumpaneele 2 nach Befestigung der Grundleite 4 mittels Befestigungselementen 5, in den Zwischenraum eingelegt. Das Volumen zwischen Vakuumisolationspaneelen 2 und Oberkante der Halteleisten wird mit einem feinen Schüttgut 16 z.B. mit Quarzmehl aufgefüllt und abgezogen. Die erforderliche Dampfsperre 1 wird hier mit Hilfe einer selbstklebenden Alufolie errichtet, die zudem überlappend verlegt wird. Die Wärmeisolation wird noch mit tragfähigen Druckausgleichsplatten 17 z.B. Gips- oder Spannplatten und mit Estrich 8, vorzugsweise mit Trockenestrich, abgedeckt.

Fig. 4 zeigt die Leistenanordnung an der Außenwand.
Die Grundleiste 4 wird an den Befestigungsdurchbrüchen 19 mit Befestigungselementen an der Wand befestigt. Die Vakuumisolationspaneele und die Abdeckplatte werden in das offen U-Profil der Grundleiste 4 eingesteckt. Die Stützleiste 20 wird in die Nut der Abdeckplatte und in die Grundleiste 4 eingesteckt. Die Enden der Stützleiste 20 sind so angeformt, dass der Mittelsteg in das U-Profil der Grundleiste passt und die Stegfläche 21 der Halteleisten 4 und 9 sowie die Stegfläche der Stützleiste 20, die in die Nut der Abdeckplatte eintauchen, auf einer Ebene liegen. Diese Stegflächen 21 werden von der Abdeckplatte komplett abgedeckt, so dass sich eine homogene ebene Fläche ergibt, die schließlich als Basis für den Fassadenputz dient

### Bezugszeichenliste

- 1: Dampfsperre
- 2: Vakuumisolationspaneele
- 3: Außenwand
- 4: Grundleiste
- 5: Befestigungselement
- 6: Abdeckplatte
- 7: Nut
- 8: Schenkel
- 9: Zwischenleiste
- 10: Befestigungsschenkel
- 11: Boden
- 12: Kartuschenkitt
- 13: Mittelsteg
- 14: technische Leitung
- 15: Spanplatte
- 16: Schüttgut
- 17: Druckausgleich
- 18: Estrich
- 19: Befestigungsdurchbruch
- 20: Stützleiste
- 21: Stegfläche

## Patentansprüche

1. Wärmedämmende Wandverkleidung mit mittels Befestigungselemente (5) angebrachten Abdeckplatten (6) und Isolationspaneelen (2) sowie mit einer Folie als Dampfsperre (1) **dadurch gekennzeichnet,**
- **daß** mit Hilfe der Befestigungselemente waagrecht verlaufende Halte- (4, 9) und senkrechte Stützleisten (20) angebracht sind,
- **daß** die Befestigungselemente (5) im Falle des Durchgreifens der Dampfsperre (1) flächig mit einer zusätzlichen Folie dichtend überklebt oder mit einem Dampftichten Kartuschenkitt abgedichtet sind,
- **daß** die Halteleisten als Grundleiste (4) nach oben offene U beschreiben und als Zwischenleiste (9) als T außenends geformt sind,
- **daß** als Isolations aneelen Vakuumisolationspaneele (2) zwischen
- die Leisten (4, 9, 20) eingestellt sind und
- nach außen zur Ausbildung der Oberfläche die Abdeckplatten (6) randseitig an den Leisten (4, 9, 20) befestigt sind und
- **daß** die Dampfsperre (1) auf der wärmenden Seite der Vakuumisolationspaneele (2) angebracht ist.

2. Wandverkleidung nach Anspruch 1, **dadurch gekennzeichnet, dass** jede Abdeckplatte (6) eine Styroporplatte und/oder Holzverkleidung und/oder Gipskartonplatte ist.

3. Wandverkleidung nach Anspruch 1 und 2, **dadurch gekennzeichnet, dass** die waagrechten Grundleisten (4) aus einem U-Profil mit gleicher Schenkellänge und unterschiedlich großen, gegenüber liegenden Durchbrüchen zum einen für die Befestigungsmittel und zum anderen für das Befestigungswerkzeug bestehen oder aus einem U-Profil mit einem längeren Schenkel bestehen, an dem gut zugängliche Durchbrüche zur Aufnahme der Befestigungsmittel vorgesehen ist.

4. Wandverkleidung nach Anspruch 1, **dadurch gekennzeichnet, dass** die Stützleisten (20) an den Enden so angeformt sind, dass sich der Mittelsteg im montierten Zustand am entsprechenden Schenkel der Halteleiste (4,9), insbesondere Grund- und Zwischenleiste, abstützt und dass Stützleiste und Halteleiste zur Aufnahme von Halteplatten eine gemeinsame Ebene bilden.

5. Wandverkleidung nach Anspruch 1 bis 4, **dadurch gekennzeichnet, dass** die Länge der Mittelstege an den Leisten auf die jeweilige Dicke der Vakuumisolationspaneele abgestimmt sind, so dass diese in den durch die Leisten gebildeten Zwischenraum einlegbar sind und dass die Leisten den größten Umfang der Paneelen quasi wie ein Rahmen umschließt.

6. Wandverkleidung nach Anspruch 1, **dadurch gekennzeichnet, dass** die Abdeckplatten (6) am Umfang eine umlaufende, auf die Schenkeldicke und Schenkelhöhe der Leisten abgestimmte Nut aufweisen und dass der eine der durch die Nut entstandenen Randabschnitte etwa um eine halbe bis zu einer ganzen Mittelstegdicke kürzer ist als der andere Randabschnitt.

7. Wandverkleidung nach Anspruch 6, **dadurch gekennzeichnet, dass** die Länge der Mittelstege der Leisten so gewählt sind, dass die Leisten die Abdeckplatten diese am kürzeren Randabschnitt komplett oder teilweise umschließen.

8. Wandverkleidung nach Anspruch 2 bis 7, **dadurch gekennzeichnet, dass** die Leisten aus eine langzeitstabilen Material mit einer niedrigen Wärmeleitzahl, insbesondere aus Hart-PVC bestehen und die Mittelstege zur weiteren Verringerung der Wärmeleitfähigkeit mit einem geringen, jedoch der geforderten Festigkeit entsprechenden Querschnitt und/oder mit Durchbrüchen ausgestattet sind.

9. Wandverkleidung nach einem der vorhergehenden Ansprüche, **dadurch gekennzeichnet, dass** die Dampfsperre (1) stets auf der warmen Seite der montierten Vakuumisolierpaneele angeordnet ist und vorzugsweise aus einer relativ verletzungsunempfindlichen, selbstklebenden Alufolie gebildet ist, die zudem überlappend angebracht ist.

10. Außenwandverkleidung nach einem der vorhergehenden Ansprüche, **dadurch gekennzeichnet, dass** die Außenwandverkleidung aus einer an die Wand (3) geklebten Alufolie (1), aus waagrechten montierten Grund- und Zwischenleisten (4, 9) und dazwischen eingelegten Stützleisten (20) und aus Vakuumisolationspanele (2) sowie aus Hartschaum- Abdeckplatten (6) besteht, die von Leisten gehalten werden, wobei die Abdeckplatter, die Leisten überdecken und zur Aufnahme einer Fassadenbeschichtung eine ebene und homogene Oberfläche bilden.

11. Außenwandverkleidung nach Anspruch 10, **dadurch gekennzeichnet, dass** die Vakuumisolationspaneele (2) und die Abdeckplatten (6) ein Bauteil bilden-und als solches zwischen den Halteleisten (4,9) und den Stützleisten (20) positioniert sind.

12. Wandverkleidung nach Anspruch 1 bis 9, **dadurch gekennzeichnet, dass** die Fugenabdichtung der Paneelenränder mit einem dampfdichten Kartuschenkitt (12), vorzugsweise aus einem Acryldichtstoff, besteht.

13. Innenwandverkleidung nach Anspruch 12, **dadurch gekennzeichnet, dass** die Innenwandverkleidung so aufgebaut ist, dass zwischen der Dampfsperre und der Innenwandbeschichtung Heiz oder Wärmestrahlelemente anordenbar sind.

14. Innenwandverkleidung nach Anspruch 13, **dadurch gekennzeichnet, dass** die Heiz- oder Wärmestahlelemente an den Halteleisten befestigt, z.B. eingehängt, sind.

15. Innenwandverkleidung nach Anspruch 13 und 14, **dadurch gekennzeichnet, dass** die Energiezuführung zu den Heiz- und Wärmestrahlelementen in den Zwischenleisten (9) verlegbar sind, die an Stelle der Grundleisten (4) an der Innenwand (3) anbringbar sind.

16. Wandverkleidung nach Anspruch 1 und 15, **dadurch gekennzeichnet, dass** technische Leitungen (14) z.B. für Strom, Wasser oder Heizung in den Zwischenleisten (9) verlegbar sind.

17. Deckenverkleidung nach Anspruch 1 und 9 , **dadurch gekennzeichnet, dass** die Deckenverkleidung aus einer von Grund- und Zwischenleisten (4,9) an der Decke gehaltenen Wärmedämmung aus Vakuumisolationspaneele (2) besteht und dass zwischen sichtbarer Deckenverkleidung und der Wärmedämmung eine Dampfsperre, vorzugsweise eine selbstklebende Alufolie, angebracht ist.

18. Deckenverkleidung nach Anspruch 1 und 9 , **dadurch gekennzeichnet, dass** die Deckenverkleidung aus einer von Grund- und Zwischenleisten (4,9) an der Decke gehaltenen Wärmedämmung aus Vakuumisolierpaneele (2) besteht, deren Randbereiche mit einer Dampfsperre abgedichtet werden und zudem auch die Abdeckplatten (6) von den Leisten gehalten werden, welche die Abdeckplatten überdecken und eine ebene und homogene Oberfläche zu bilden.

19. Bodenverkleidung nach Anspruch 1 und 9 , **dadurch gekennzeichnet, dass** die Bodendämmung aus einer von Grund- und Zwischenleisten (4,9) am Boden (11) gehaltenen Wärmedämmung aus Vakuumisolationspaneele (2) besteht und dass die Randbereiche der Paneelen mit einer Dampfsperre (1) abgedichtet und Vertiefungen mit Quarzmehl (16) ausgleichbar ist, bevor auf die Leisten Druckausgleichplatten (17) als Basis für eine weitere Bodenbeschichtung (18) verlegbar sind.

20. Bodenverkleidung nach Anspruch 19, **dadurch gekennzeichnet, dass** an Stelle von Grundleisten (4) nur Zwischenleisten (9) am Boden (11) angeordnet werden und dass im Zwischenraum, der von der ersten Zwischenleiste (9) und der Wand (3) gebildet wird, technische Leitungen (14), z.B. für Wasser, Strom und Heizung, verlegt sind.

21. Bodenverkleidung nach Anspruch 19 und 20, **dadurch gekennzeichnet, dass** Zwischenleisten (9) mit verstärktem Mittelsteg oder nur Grundleisten (4) vorgesehen sind, die Rücken an Rücken verlegt einen doppelten Tragsteg bilden.

22. Bodenverkleidung nach Anspruch 19 und 21, **dadurch gekennzeichnet, dass** die mit einem U-Profil ausgestatteten Grundleisten (4) paarweise Rücken an Rücken verlegt sind und dass im Zwischenraum, zwischen erster Leiste (4) und Wand (3) technische Leitungen (14), z.B. für Wasser, Strom und Heizung verlegt sind.

## Claims

1. Heat-insulating wall cladding having cover panels (6) and insulation panels (2), which are attached by means of fastening elements (5), comprising a foil as vapour barrier (1), **characterised in that**
- retaining profiles (4, 9) and vertical supporting profiles (20) are attached by means of fastening elements
- the fastening elements (5), in the case in which they penetrate the vapour barrier (1), are overbonded with an additional foil or are sealed with a vapour-tight cartridge sealant,
- the retaining profiles, in the form of base profiles (4), describe an upwardly open U, and in the form of intermediate profiles (9) are formed as a T at their outer ends,
- vacuum insulation panels (2) are inserted as insulation panels between the profiles (4, 9, 20), and
- the vapour barrier (1) is attached at the heating side of the vacuum insulation panels (2).

2. Wall cladding according to claim 1, **characterised in that** each cover panel (6) is an expanded polystyrene panel and/or wood cladding and/or gypsum board panel.

3. Wall cladding according to claim 1 and 2, **characterised in that** the horizontal base profiles (4) consist of a U profile with equal flange length and differently sized, mutually opposite openings, firstly for the fastening means and secondly for the fastening tool, or of a U profile with one longer flange, on which readily accessible openings are provided to receive the fastening means.

4. Wall cladding according to claim 1, **characterised in that** the support profiles (20) are formed at their ends such that the centre web in the mounted state is supported on the corresponding flange of the retaining profile (4,9), in particular base profiles and intermediate profiles, and **in that** the supporting profile and retaining profile form a common plane to receive retaining plates.

5. Wall cladding according to claims 1 to 4, **characterised in that** the lengths of the centre webs on the profiles are adapted to the respective thickness of the vacuum insulation panels, such that the latter can be inserted into the interspace formed by the profiles, and **in that** the profiles enclose the largest perimeter of the panels quasi in the manner of a frame.

6. Wall cladding according to claim 1, **characterised in that** the cover panels (6) have a surrounding groove, which is adapted to the flange thickness and flange height, and **in that** one of the edge sections created by means of the groove is shorter by approximately one half up to a whole centre web thickness than the other edge section.

7. Wall cladding according to claim 6, **characterised in that** the length of the centre webs of the profiles are chosen such that the profiles [sic] the cover panels completely or partly enclose the cover panels on the shorter edge section.

8. Wall cladding according to claims 2 to 7, **characterised in that** the profiles consist of a durable material with a low coefficient of thermal conductivity, in particular of rigid PVC, and, to further reduce the thermal conductivity, the centre webs have a small cross-section, but one that corresponds to the required strength and/or have openings.

9. Wall cladding according to one of the preceding claims, **characterised in that** the vapour barrier (1) is always arranged at the warm side of the mounted vacuum insulation panels, and is preferably formed of a self-adhesive aluminium foil that is relatively insensitive to damage and is also mounted in an overlapping manner.

10. Exterior wall cladding according to one of the preceding claims, **characterised in that** the exterior wall cladding consists of an aluminium foil (1) that is bonded to the wall (3) and consists of horizontally mounted base profiles and intermediate profiles (4, 9) and support profiles (20) inserted therebetween, and of vacuum insulation panels (2), as well as of rigid-foam cover panels (6), which are held by profiles, the cover panels covering the profiles and forming a flat and homogeneous surface to receive a façade coating.

11. Exterior wall cladding according to claim 10, **characterised in that** the vacuum insulation panels (2) and the cover panels (6) form a part and, as such, are positioned between the retaining profiles (4, 9) and the support profiles (20).

12. Wall cladding according to claims 1 to 9, **characterised in that** the joint sealing of the panel edges consists of a vapour-tight cartridge filler (12), preferably an acrylic sealant.

13. Interior wall cladding according to claim 12, **characterised in that** the interior wall cladding is constructed such that heating or radiant elements can be arranged between the vapour barrier and the interior wall coating.

14. Interior wall cladding according to claim 13, **characterised in that** the heating or radiant elements are fixed, e.g. suspended, on the retaining profiles.

15. Interior wall cladding according to claims 13 and 14, **characterised in that** the energy supply to the heating or radiant elements is installed in the intermediate profiles (9), which can be attached to the interior wall (3) instead of the base profiles (4).

16. Wall cladding according to claims 1 and 15 **characterised in that** technical lines (14), e.g. for electricity, water or heating, can be installed in the intermediate profiles (9).

17. Ceiling cladding according to claims 1 and 9, **characterised in that** the ceiling cladding consists of thermal insulation which is held on the ceiling by base and intermediate profiles (4, 9) and consists of vacuum insulation panels (2), and that a vapour barrier, preferably a self-adhesive aluminium foil, is attached between the visible ceiling cladding and the thermal insulation.

18. Ceiling cladding according to claims 1 and 9, **characterised in that** the ceiling cladding consists of a thermal insulation which is held on the ceiling by base profiles and intermediate profiles (4, 9) and consists of vacuum insulation panels, and of which the edge regions are sealed with a vapour barrier and in addition **in that** the cover panels (6) are held by profiles that cover the cover panels and form a flat and homogeneous surface.

19. Floor cladding according to claims 1 and 9, **characterised in that** the floor insulation consists of a thermal insulation, which is held on the floor (11) by base profiles and intermediate profiles (4, 9) and consists of vacuum insulation panels (2), and **in that** the edge regions of the panels are sealed with a vapour barrier (1) and depressions can be levelled with quartz flour (16) before pressure equalisation panels (17) can be laid on the profiles as a basis for a further floor covering (18).

20. Floor cladding according to claim 19, **characterised in that**, instead of base profiles (4) only intermediate profiles (9) are arranged on the floor (11) and that technical lines (14), e.g. for water, electricity and heating, are laid in the interspace, which is formed by the first intermediate profile (9) and the wall (3).

21. Floor cladding according to claims 19 and 20, **characterised in that** intermediate profiles (9) with a reinforced centre web or only base profiles (4) are provided, which, when laid back to back, form a double web.

22. Floor cladding according to claims 19 and 21. **characterised in that** the base profiles (4) equipped with a U profile are laid back to back in pairs and that technical lines (14), e.g. for water, electricity and heating, are laid between the first profile (4) and the wall (3).

## Revendications

1. Revêtement mural calorifuge comprenant des plaques de recouvrement (6) et des panneaux isolants (2) fixés à l'aide d'éléments de fixation (5) ainsi qu'une feuille servant d'écran pare-vapeur (1), **caractérisé en ce que**
- des lattes de fixation (4, 9) horizontales et des lattes de renfort (20) verticales sont posées au moyen d'éléments de fixation,
- les éléments de fixation (5) sont recouverts d'une feuille étanche supplémentaire ou sont isolés au moyen d'un mastic d'étanchéité en cartouche pour le cas où l'écran pare-vapeur (1) serait transpercé,
- les lattes de fixation sont en forme de U ouvert vers le haut en ce qui concerne les lattes de base (4) et se terminent en T pour les lattes intermédiaires (9),
- les panneaux isolants sont des panneaux d'isolation sous vide (2) insérés entre les lattes (4, 9, 20) et
- les bords des plaques de recouvrement (6) sont fixés sur les lattes (4, 9, 20) pour former une surface et
- l'écran pare-vapeur (1) est posé sur la face chaude du panneau isolant sous vide (2).

2. Revêtement mural selon la revendication 1, **caractérisé en ce que** chaque plaque de recouvrement (6) est une plaque de polystyrène expansé et/ou un revêtement en bois et/ou une plaque de parement en plâtre.

3. Revêtement mural selon les revendications 1 et 2, **caractérisé en ce que** les lattes de base horizontales (4) se composent soit d'un profilé en U équilatéral présentant des perforations de différentes tailles en face les unes des autres, d'une part pour les éléments de fixation, et d'autre part pour pouvoir passer l'outil servant à serrer ces éléments, soit d'un profilé en U avec un côté plus long muni de perforations facilement accessibles pour les éléments de fixation.

4. Revêtement mural selon la revendication 1, **caractérisé en ce que** les extrémités des lattes de renfort (20) sont formées de telle sorte qu'une fois montées, leur arête centrale vient butter contre le fond de la latte de fixation (4, 9), soit de la latte de base ou de la latte intercalaire, et **en ce que** les surfaces extérieures de la latte de renfort et de la latte de fixation se trouvent dans le même plan pour pouvoir poser les plaques de recouvrement.

5. Revêtement mural selon les revendications 1 à 4, **caractérisé en ce que** la longueur de l'arête centrale des lattes est adaptée à l'épaisseur des panneaux isolants sous vide de manière à ce que ces derniers puissent rentrer dans l'espace formé par les lattes et à ce que les lattes entourent les panneaux sur leur périmètre extérieur quasiment comme un cadre.

6. Revêtement mural selon la revendication 1, **caractérisé en ce que** les plaques de recouvrement (6) présentent sur leur pourtour une rainure adaptée à l'épaisseur et à la hauteur du côté des lattes, et **en ce que** l'un des bords de la plaque en quelque sorte partagée par la rainure est plus court que l'autre bord, la différence de longueur pouvant être égale à la moitié ou à la totalité de l'épaisseur de la nervure centrale.

7. Revêtement mural selon la revendication 6, **caractérisé en ce que** la longueur des arêtes centrales des lattes est choisie de sorte que celles-ci entourent entièrement ou partiellement le bord le plus court des plaques de recouvrement.

8. Revêtement mural selon l'une des revendications 2 à 7, **caractérisé en ce que** les lattes se composent d'un matériau stables à long terme et de faible conductivité thermique, notamment de PVC, et **en ce que** les arêtes centrales ont une petite section garantissant cependant la résistance requise, et/ou sont pourvues de perforations afin de réduire encore la conductivité.

9. Revêtement mural selon l'une des revendications précédentes, **caractérisé en ce que** l'écran pare-vapeur (1) est placé du côté chaud du panneau d'isolation sous vide et est de préférence formé d'une feuille d'aluminium autoadhésive relativement peu sensible aux détériorations et dont les bords se chevauchent.

10. Revêtement mural extérieur selon l'une des revendications précédentes, **caractérisé en ce que** le revêtement mural extérieur se compose d'une feuille d'aluminium (1) collée sur le mur (3), de lattes de base et de lattes intermédiaires (4, 9) avec des lattes de renfort (20) intercalées, et de plaques de recouvrement (6) en mousse rigide fixées par des lattes, les plaques (6) recouvrant les lattes et formant une surface plane et homogène pour l'application du parement de la façade.

11. Revêtement mural extérieur selon la revendication 10, **caractérisé en ce que** le panneau d'isolation sous vide (2) et les plaques de recouvrement (6) constituent un ensemble positionné entre les lattes de fixation (4, 9) et les lattes de renfort (20).

12. Revêtement mural selon l'une des revendications 1 à 9, **caractérisé en ce que** l'étanchéité des joints aux bords des panneaux est assurée au moyen d'un mastic en cartouche (12), de préférence composé d'un matériau acrylique.

13. Revêtement mural intérieur selon la revendication 12, **caractérisé en ce que** la structure du revêtement intérieur permet de placer des éléments chauffants ou thermorayonnants entre l'écran pare-vapeur et la couche intérieure.

14. Revêtement mural intérieur selon la revendication 13, **caractérisé en ce que** les éléments chauffants ou thermorayonnants sont fixés, par ex. accrochés, sur les lattes de fixation.

15. Revêtement mural intérieur selon les revendications 13 et 14, **caractérisé en ce que** les câbles d'alimentation en énergie des éléments chauffants et thermorayonnants peuvent être encastrés dans les lattes intermédiaires (9) posées sur le mur intérieur (3) au lieu des lattes de base (4).

16. Revêtement mural selon les revendications 1 à 15, **caractérisé en ce que** les conduits techniques (14), par ex. pour l'électricité, l'eau ou le chauffage, peuvent être encastrés dans les lattes intermédiaires (9).

17. Revêtement pour plafond selon les revendications 1 à 9, **caractérisé en ce que** le revêtement pour plafond se compose d'une isolation thermique se présentant sous forme de panneau d'isolation sous vide (2), fixée au plafond au moyen de lattes de base et de lattes intermédiaires (4, 9), et **en ce qu'**un écran pare-vapeur, de préférence une feuille d'aluminium autoadhésive, est placée entre le revêtement visible du plafond et l'isolation thermique.

18. Revêtement pour plafond selon les revendications 1 à 9, **caractérisé en ce que** le revêtement pour plafond se compose d'une isolation thermique se présentant sous forme de panneau d'isolation sous vide (2), fixée au plafond au moyen de lattes de base et de lattes intermédiaires (4, 9) et dont les bords sont étanchés au moyen d'un écran pare-vapeur, les plaques de recouvrement (6) étant maintenues par les lattes qui les recouvrent afin de former une surface plane et homogène.

19. Revêtement pour sol selon les revendications 1 à 9, **caractérisé en ce que** l'isolation se compose d'une isolation thermique se présentant sous forme de panneau d'isolation sous vide (2), et **en ce que** les bords des panneaux sont étanchés au moyen d'un écran pare-vapeur (1), les espaces creux pouvant être égalisés avec de la poudre de quartz (16) avant de poser les plaques de compensation (17) sur les lattes afin de constituer une surface plane pour poser la couche de revêtement suivante (18).

20. Revêtement pour sol selon la revendication 19, **caractérisé en ce que** les lattes de base (4) au sol (11) sont remplacées par des lattes intermédiaires (9), et **en ce que** les conduits techniques (14), par ex. pour l'eau, l'électricité et le chauffage courent dans l'espace créé entre la première latte intermédiaire (9) et le mur (3).

21. Revêtement pour sol selon les revendications 19 et 20, **caractérisé en ce que** l'on n'utilise que des lattes intermédiaires (9) à arête centrale renforcée ou que des lattes de base (4) placées dos à dos et formant un double support.

22. Revêtement pour sol selon les revendications 20 et 21, **caractérisé en ce que** les lattes de base (4) se présentant sous forme de profilé en U sont placées dos à dos deux par deux et **en ce que** les conduits techniques (14), par ex. pour l'eau, l'électricité et le chauffage sont logés dans l'espace créé entre la première latte (4) et le mur (3).
